(19) Europäisches Patentamt
European Patent Office
Office européen des brevets

(11) **EP 1 566 424 B1**

(12) **EUROPEAN PATENT SPECIFICATION**

(45) Date of publication and mention of the grant of the patent:
**19.09.2018 Bulletin 2018/38**

(21) Application number: **03774214.5**

(22) Date of filing: **25.11.2003**

(51) Int Cl.:
*C09K 3/10* (2006.01)   *B29C 73/22* (2006.01)
*B29C 73/16* (2006.01)   *B29L 30/00* (2006.01)

(86) International application number:
**PCT/JP2003/015027**

(87) International publication number:
**WO 2004/048493 (10.06.2004 Gazette 2004/24)**

(54) **PUNCTURE-SEALING AGENT**

FLICKMITTEL

AGENT D'OBTURATION DE PERFORATION

(84) Designated Contracting States:
**DE FR GB**

(30) Priority: 27.11.2002   JP 2002343809
14.05.2003   JP 2003135553
28.05.2003   JP 2003150884
03.10.2003   JP 2003345603
30.10.2003   JP 2003370012

(43) Date of publication of application:
**24.08.2005   Bulletin 2005/34**

(73) Proprietor: **Bridgestone Corporation
Tokyo 104-8340 (JP)**

(72) Inventors:
• **NAKAZAWA, Kazuma
Chuo-ku, Tokyo 104-8340 (JP)**
• **YANAGI, Hideshi
Chuo-ku, Tokyo 104-8340 (JP)**
• **IZUMOTO, Ryuji
Chuo-ku, Tokyo 104-8340 (JP)**
• **IWASAKI, Shinichi
Chuo-ku, Tokyo 104-8340 (JP)**

(74) Representative: **Oxley, Robin John George et al
Marks & Clerk LLP
90 Long Acre
London WC2E 9RA (GB)**

(56) References cited:
EP-A2- 0 167 934      JP-A- 10 017 851
JP-A- 10 017 851      JP-A- 2001 062 934
JP-A- 2001 062 934    JP-A- 2001 198 986
JP-A- 2001 198 986    US-A- 4 501 825

**Description**

Technical Field

The present invention relates to a puncture-sealant for use in sealing a hole in a punctured tire.

Background Art

As a repairing agent for sealing a punctured site of a tire, various puncture-sealants are known (see, for example, Patent Document 1). Such puncture-sealants mainly contain a colloid dispersion-system polymer in an aqueous medium (latex). Examples of the latex to be used include polyethylene-butadiene latex, polyvinylacetate latex, acrylic copolymer latex, nitrile latex and polychloroprene latex.

In order to introduce such a puncture-sealant into a tire and charge an internal pressure to enable some running, a device, such as a spray can, is conventionally used, which includes a pressure-resistant container for storing a puncture-sealant containing a liquefied gas as a pressure source. As the liquefied gas, a gas mixture of propane and butane is mainly used. In rare cases, chlorofluorocarbons may also be used. One end of a hose is connected to the spray can at an outlet valve thereof, and a threaded adapter for a tire valve is attached to another end of the hose.

When a tire is punctured, the puncture-sealant is sprayed from the spray can through the tire valve into the tire. Along with the spraying of the puncture-sealant, an internal pressure of the tire is recharged with fuel gas of a particular pressure of a level depending on an amount of leaked gas. At this time, with the puncture-sealant being sprayed into the tire to seal the damage, the tire generally travels several kilometers, although the distance varies depending on the degree of damage of the tire.

In another device, a puncture-sealant is stored in a compressive flask to be connected, via an adapter, to a tire valve, whose insert has been removed in advance. The puncture-sealant is blown into a tire by a compressive action of the flask. After the valve insert is inserted, the tire is inflated again to a specific internal pressure with a help of a carbon dioxide cartridge.

However, puncture-sealants currently in use are not completely satisfactory. Such puncture-sealants are removed due to mechanical action relatively soon, and are slow to effect sealing of a puncture hole. Therefore, use of the puncture-sealants necessitates significant time for preparatory running before completing sealing and making the punctured tire ready for running.

There is also a problem with conventional devices for introducing a puncture-sealant into a tire and pumping up the tire. Spray cans containing the fuel gas mixture of propane and butane cannot be used satisfactory unless they are cooled down to about 0 °C, depending on a mixing ratio thereof. Further, the gas mixture of propane and butane is inflammable and explosive. Chlorofluorocarbons exert an adverse effect on the environment. In addition, all of known fuel gases are subjected to limitation in an amount thereof usable at a time of puncture.

As a puncture-sealant and a pumping-up device for a tire that can solve the above-described problems, Patent Document 1, for example, discloses a puncture-sealant containing rubber latex, which is solely composed of natural rubber latex, and a resin adhesive that is compatible with the natural rubber latex, as well as a sealing pumping-up device using this puncture-sealant. However, recently, allergic reactions caused by a certain protein contained in natural rubber latex are becoming a problem. Specifically, some people may suffer from symptoms like urticaria, such as itching, red scars and swelling, at sites of skin of their hands, faces, or the like, where the natural rubber has adhered. Further, some people, who have inhaled natural rubber latex splashed in air, may suffer from symptoms such as asthma, rhinitis and/or conjunctivitis. That is, in a case where a puncture-sealant containing natural rubber is used, the puncture-sealant may cause health problems on an operator due to allergic reactions when the puncture-sealant accidentally adheres to the hand, the face, or the like of the operator, or the operator accidentally inhales the puncture-sealant splashing with the gas during repair of a punctured tire.

Moreover, ammonia is usually added to natural rubber latex as a pH controller to adjust the pH of the natural rubber latex around a range from 9 to 10 to ensure stability of the latex. Therefore, during repairing of a punctured tire, a strong irritating odor is exuded from the puncture-sealant. This makes the working environment not good for an operator and may exert adverse effects to health of the operative.

In recent years, with respect to natural rubbers (NR) such as described above, improvements by developing deproteinized NRs are in progress. Although such improvements of natural rubbers effectively improve allergic reactions of human bodies, they do not eliminate or reduce the strong irritating odor when the natural rubbers are used as puncture-sealants. Further, there have been attempts to use chemicals other than ammonia as the pH controller for the natural rubbers. However, practically, it is difficult to obtain sufficient stability of the natural rubber latex contained in puncture-sealants by using chemicals other than ammonia.

Puncture-sealants are required to have properties such as (1) puncture hole sealing ability, (2) ease of injection (the puncture-sealant should be easily injected through a valve, or the like), (3) a certain degree of antifreezing property (the puncture-sealant should not freeze when it is used at low temperature), (4) separation stability (the puncture-sealant should not separate during a long-term storage), and the like.

With conventional puncture-sealants as described above, latex, which is the main component of the puncture-sealants, serves to ensure the sealing ability thereof. Further, an antifreezing agent serves to ensure the antifreezing property, and a thickener and a pH controller serve to ensure the ease of injection and the separation stability of the puncture-sealants.

However, the above-described properties (1) to (4) are in a trade-off relationship. For example, if a glycol content in a puncture-sealant is increased, the antifreezing property of the puncture-sealant becomes sufficient. However, in this case, since a relative latex content is decreased, the sealing ability is lowered. That is, it is difficult to produce a puncture-sealant sufficiently provided with all of the above-described properties.

Among the above-described properties (1) to (4), the most important property is the sealing ability. In recent years, in order to improve the sealing ability, puncture-sealants containing fiber have been put into practical use.

However, even in the puncture-sealants containing fiber, the above-described properties are not sufficiently balanced. Namely, as such puncture-sealants contain a large amount of fiber, viscosity thereof is increased and the ease of injection is significantly lowered.

In other words, even with the puncture-sealants containing fiber, the ideal design of mix for additives has not sufficiently been established.

In view of the foregoing, the present invention is directed to solve the above-described conventional problems. Specifically, the invention is directed to provide a puncture-sealant that can maintain a high sealing ability and function excellent in actual use. A puncture sealing agent according to the preamble of claim 1 is disclosed in US4501825.

Disclosure of the Invention

In order to achieve the above-described objectives, the present inventors have found through intensive study that these objectives can be achieved by the following invention.

Namely, the invention is a puncture sealing agent for sealing a hole in a punctured tire, the puncture-sealant comprising:

(1) at least one type of rubber latex selected from the group consisting of SBR latex, NBR latex, MBR latex, carboxyl-modified SBR latex and carboxyl-modified NBR latex;
(2) an antifreezing agent; and
(3) at least one of a short fiber and a resin adhesive that is compatible with the rubber latex.

characterised in that a content of solid components is within a range from 5 to 70% by mass, the short fiber comprises one of polyester, polyethylene, nylon, polypropylene or a complex of two or more of them, and wherein a ratio (L/D) of the length (L) of the short fiber to the diameter (D) of the short fiber is within a range of 5 < L/D < 2000.

Further, the puncture-sealant of the invention preferably comprises one more aspects of the following aspects (1) to (11).

(1) A first aspect is that the resin adhesive is added to an aqueous dispersion of the rubber latex or an aqueous emulsion of the rubber latex.
(2) A second aspect is that a content of the resin adhesive is within a range from 3 to 30 % by mass.
(3) A third aspect is that a content of the antifreezing agent is within a range from 5 to 50 % by mass.
(5) A fourth aspect is that a viscosity of the puncture-sealant at least before it is filled in the tire and at temperatures in the range from 60°C to -20°C is within a range from 3 mPa.s to 6000 mPa.s.
(6) A sixth aspect is that a content of the short fiber is within a range from 0.1 to 5 % by mass.
(7) A seventh aspect is that a diameter (D) of the short fiber is within a range of $1 \leq D \leq 100$ $\mu$m.
(8) An eighth aspect is that a specific gravity (S) of the short fiber is within a range of $0.8 \leq S \leq 1.4$.
(9) A ninth aspect is that all or a part of the short fiber is treated with a solvent.
(10) A tenth aspect is that the (3) at least one of a short fiber and a resin adhesive that is compatible with the rubber latex is a short fiber, of the short fiber, all or a part is treated with at least one of a higher alcohol derivative and a betaine surfactant.
(11) An eleventh aspect is that the puncture-sealing agent of the tenth aspect further comprises (4) a resin adhesive that is compatible with the rubber latex.

Brief Description of Drawings

Figure 1 is a schematic view illustrating one example of a sealing pumping-up device used for filling a tire with a puncture-sealant according to an embodiment of the present invention; and

Figures 2A and 2B are schematic views illustrating another example of the sealing pumping-up device used for filling a tire with a puncture-sealant according to the embodiment of the invention.

Best Mode for Carrying Out the Invention

A puncture-sealant of the present invention is a puncture-sealant for sealing a hole in a punctured tire, and comprising: (1) at least one type of rubber latex selected from the group consisting of SBR latex, NBR latex, carboxyl-modified SBR latex and carboxyl-modified NBR latex (which rubber latex will occasionally be referred to simply as "rubber latex" hereinafter); (2) an antifreezing agent; and (3) at least one of a short fiber and a resin adhesive being compatible with the rubber latex.

Hereinafter, each of the above components, and additives that may be optionally added, will be described.

[Resin Adhesive]

A resin adhesive that is compatible with the above-described rubber latex is to be used. As such a resin adhesive, for example, a terpene resin such as terpenephenol resin or a butyl rubber material such as polyisobutylene can be used.

In the present specification, the expression that the resin adhesive is "compatible" with the rubber latex means that the resin adhesive does not cause coagulation of the rubber latex at all, and that the resin adhesive is used to enhance an adhesive strength of the rubber latex to a tire. For example, the resin may be added to an elastomer that serves as a tackifier for a rubber film.

The puncture-sealant of the invention employs specific rubber latex that does not contain natural rubber. Therefore, even if the puncture-sealant accidentally adheres to the hand, the face, or the like, of an operator or the operator accidentally inhales the puncture-sealant splashing with a gas during repair of a punctured tire, there is no risk of causing health problems due to allergic reactions, and therefore, the operator can safely carry out repair of a tire. Further, since the resin adhesive contains no component that becomes an allergen, the operator can safely carry out repair of a tire.

Furthermore, with the puncture-sealant of the invention, sufficient stability can be obtained without adding a chemical having an irritating odor, such as ammonia, as a pH controller to the rubber latex. Therefore, such a strong irritating odor is not exuded from the puncture-sealant during puncture repair, and a working environment for an operator is improved and adverse effects to health due to the irritating odor can be prevented.

Moreover, as a result of comparative tests conducted by the present inventors, the puncture-sealant of the invention can exhibit excellent sealing ability for a punctured tire, even under conditions of high temperature and low temperature, as well as under a wet condition, as with puncture-sealants containing rubber latex composed solely of natural rubber.

As the terpenephenol resin, for example, an α-pinenephenol resin, a dipentenephenol resin, a terpenebisphenol resin, or hydrogenated products of these resins can be used. In addition, commercially available terpenephenol resins can also be used.

A resin adhesive content is preferably in a range from 3 to 30 % by mass, more preferably in a range from 5 to 25 % by mass, and even more preferably in a range from 7 to 20 % by mass. A resin adhesive content within the range from 3 to 30 % by mass can provide satisfactory sealing ability in actual applications.

The resin adhesive is preferably added to an aqueous dispersion or an aqueous emulsion of the rubber latex, in view of improving the sealing ability.

[Short Fiber]

Short fiber enters into and serves to cause clogging of a hole (a defective portion) created in a punctured tire, so that the hole can be quickly and reliably closed. A short fiber content in the puncture-sealant is preferably in a range from 0.1 % by mass to 5 % by mass.

If the short fiber content is less than 0.1 % by mass, an improvement in the sealing ability obtained by adding the short fiber may not be sufficient. On the other hand, if the short fiber content is more than 5 % by mass, the short fiber may be entangled and a viscosity may be increased, lowering the ease of injection, so that it becomes difficult to sufficiently exhibit the above-described function of the short fiber. In other words, the sealing ability may be lowered.

The short fiber content is preferably in a range from 0.3 to 4 % by mass, and more preferably in a range from 0.5 to 3 % by mass.

In order to have the short fiber sufficiently exhibit the above-described function, various designs are necessitated by the short fiber. A specific gravity (S), a length (L), a diameter (D), and a ratio of length to diameter (L/D) of the short fiber are preferably in the following respective ranges.

(1) Specific gravity (S): $0.8 \leq S \leq 1.4$ (more preferably $0.9 \leq S \leq 1.3$, and even more preferably $1.0 \leq S \leq 1.2$).

If the specific gravity is less than 0.8, the short fiber may float and long-term separation stability of the puncture-sealant may be deteriorated. On the other hand, if the specific gravity is more than 1.4, the short fiber may sink and long-term separation stability of the puncture-sealant may also be deteriorated.

(2) Length (L): $0.05 \leq L \leq 10$ mm (more preferably $0.08 \leq L \leq 8$ mm, and even more preferably $0.1 \leq L \leq 6$ mm).

If the length is less than 0.05 mm, the effect of the short fiber causing clogging at a puncture defective portion, thereby improving the sealing ability, may not be sufficiently exhibited. On the other hand, if the length is more than 10 mm, the relative number of short fibers is reduced and the sealing ability may be deteriorated.

(3) Diameter (D): $1 \leq D \leq 100$ $\mu$m (more preferably $3 \leq D \leq 80$ $\mu$m, and even more preferably $5 \leq D \leq 50$ $\mu$m).

If the diameter (thickness) is less than 1 $\mu$m, the function of the short fiber to cause the clogging, thereby improving the sealing ability, may not sufficiently be exhibited. On the other hand, if the diameter is more than 100 $\mu$m, the relative number of the short fiber is reduced and the sealing ability may be deteriorated.

(4) Ratio of length to diameter (L/D) must be: $5 \leq L/D \leq 2000$ (preferably $20 \leq L/D \leq 1600$, even more preferably $50 \leq L/D \leq 1200$, and particularly preferably $100 \leq L/D \leq 300$).

If the L/D is less than 5, the function of the short fiber to cause the clogging, thereby improving the sealing ability, may not sufficiently be exhibited. On the other hand, if the L/D is more than 2000, the short fiber may be entangled to generate wads, and this may lead to deterioration of the sealing ability and the ease of injection.

It should be noted that the short fiber may be formed of a single material having a certain shape, or the short fiber may be formed of several types of materials having various shapes within the above-described ranges.

The material of the short fiber comprises one of polyester, polyethylene, nylon, polypropylene, or a composite of two or more thereof. More preferably, the short fiber is formed of one of polyethylene, nylon, polypropylene, or a composite of two or more thereof. Using such a short fiber, better separation stability can be obtained. It is preferable that all or a part of (preferably all of) the short fiber is treated with a solvent such as a higher alcohol derivative and/or a betaine surfactant. Through this treatment, the solvent acts as a surfactant to improve dispersibility of the short fiber. This treatment may be performed before or after addition of the short fiber to the puncture-sealant. Specifically, this treatment can be effected by immersing the short fiber in the above-described solvent, or spraying the solvent onto the short fiber. As the higher alcohol derivative, for example, polyglycol polyester is preferable. An amount of the solvent to be added (an amount of the solvent to be absorbed by the short fiber through the above treatment) is preferably in a range from 0.2 to 20 % by mass, more preferably in a range from 0.5 to 10 % by mass, and even more preferably in a range from 1 to 6 % by mass of the short fiber. If the amount is too small, the effect of dispersing the short fiber may be insufficient, resulting in the insufficient treatment of the short fiber. On the other hand, if the amount is too large, no further improvement of the effect can be obtained.

[Rubber Latex]

In view of ensuring good sealing ability, as described above, the rubber latex is at least one rubber latex selected from the group consisting of SBR (styrene-butadiene rubber) latex, NBR (nitrile rubber) latex, MBR (acrylic rubber) latex, carboxy-modified NBR latex and carboxy-modified SBR latex.

[Antifreezing Agent]

The antifreezing agent is not specifically limited, and for example, ethylene glycol or propylene glycol can be used. An antifreezing agent content is preferably in a range from 5 to 50 % by mass. If the antifreezing agent content is less than 5 % by mass, the antifreezing property at low temperature may be insufficient. On the other hand, if the antifreezing agent content is more than 50 % by mass, the amount of glycol is larger than the amount of the rubber latex, whereby particles of coagulated rubber latex may be present in glycol in a dispersed state during puncture repair. In this case, the sealing ability may be insufficient. A preferable content of the antifreezing agent is within a range from 10 to 40 % by mass.

In the puncture-sealant as described above, a content of solid components (which solid components will occasionally be referred to as "solids" hereinafter) in the puncture-sealant is preferably in a range from 5 to 70 % by mass.

The "solid content" can be determined in the following manner. First, 100 g of the puncture-sealant is left for 30 minutes at 200 °C. Thereafter, a residual mass of the puncture-sealant is measured, and the residual mass is divided by the initial mass of the puncture-sealant (the residual mass / the initial mass of the initial puncture-sealant).

If the solid content is less than 5 % by mass, the ratio of the rubber latex is decreased and it may become impossible to ensure sufficient sealing ability. If the solid content is more than 70 % by mass, properties other than the sealing ability may not be sufficiently ensured.

An upper limit of the solid content within the above-described range is more preferably 60 % by mass, even more preferably 50 % by mass, and particularly preferably 40 % by mass. A lower limit of the solid content within the above-described range is more preferably 8 % by mass, and even more preferably 10 % by mass.

A viscosity of the puncture-sealant under the expected conditions of actual use (at least before the puncture-sealant is filled into a tire, a temperature ranging from 60 °C to -30 °C) is preferably in a range from 3 to 6000 mPa.s, more preferably in a range from 5 to 4500 mPa.s, even more preferably in a range from 8 to 3000 mPa.s, particularly preferably in a range from 10 to 3000 mPa.s, and most preferably in a range from 15 to 1500 mPa.s.

If the viscosity is less than 3 mPa.s, the viscosity is too low and the puncture-sealant may be spilled during injection thereof into the valve. If viscosity is more than 6000 mPa.s, drag during injection is large and the ease of injection may be deteriorated. In addition, the puncture-sealant may not sufficiently spread over the inner surface of the tire, preventing a high sealing ability from being obtained. It should be noted that the viscosity can be measured, for example, with a B-type viscometer. Further, a thickener can be added if a higher viscosity is desired. On the other hand, if a lower viscosity is desired, the latex component can be decreased and an amount of water can be increased to obtain a viscosity in a desired range.

The puncture-sealant of the invention can contain water for adjusting viscosity or for dilution. Further, commonly used additives such as dispersants, emulsifiers, foam stabilizers, or pH controllers, such as caustic soda, may be added to the puncture-sealant.

According to the puncture-sealant of the invention, sufficient stability can be obtained without adding a chemical having an irritating odor such as ammonia as a pH controller to the rubber latex.

In addition, in order to achieve quick sealing and reliable sealing even with a large hole, one or more types of filler may be mixed in the puncture-sealant. Examples of an employable stable filler include silicic acid, chalk, carbon black, a synthetic resin reinforced with glass fiber, polystyrene particles, powdered rubber obtained by pulverizing a vulcanized product such as a tire, sawdust, moss rubber particles, and foam particles for cut flowers. Among them, rubber powder bonded with silicic acid and a synthetic resin reinforced with glass fiber are particularly preferable fillers.

The filler may be directly added to the puncture-sealant. However, if the puncture-sealant cannot be introduced or is difficult to be introduced through the valve without changing the size of the valve, due to the size of the filler, the filler is generally introduced into a tire when the tire is assembled on a rim such that sealing is accomplished by the puncture-sealant being injected at the time of puncture of the tire.

A content of the filler to be added to the puncture-sealant is from about 20 to 200 g/liter, and more preferably from 60 to 100 g/liter. Alternatively, the filler is placed in a tire when assembling the tire on a rim.

As liquid components, a dispersant or an emulsifier for the resin adhesive, preferably water, may be added. A liquid resin adhesive may optionally be used.

The puncture-sealant can be produced, for example, by mixing the above-described materials in a known method. In order to avoid oxidation, the puncture-sealant is preferably produced, stored and filled in a nitrogen or rare gas atmosphere.

For puncture repairing using the puncture-sealant described above, a known method can be applied. Specifically, first, a container filled with the puncture-sealant is inserted into a valve port of a tire, and an adequate amount of the puncture-sealant is injected. Thereafter, the tire is rotated so that the puncture-sealant spreads over the inner surface of the tire and a puncture hole is sealed.

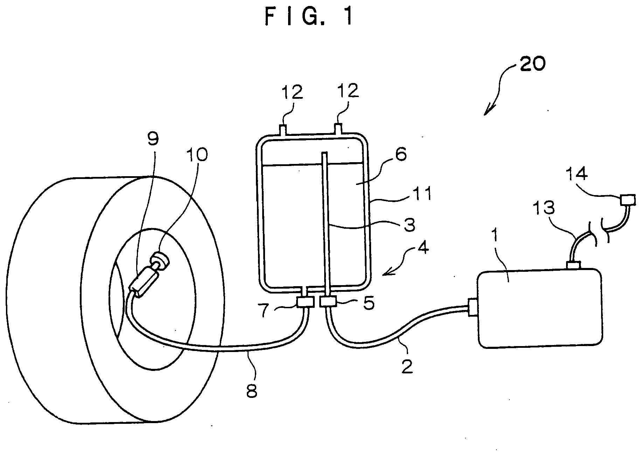

The puncture-sealant itself is introduced into the tire through use of various pumping-up devices, such as a spray can containing a gas mixture of propane and butane as a fuel gas, and inflates the tire again. A pumping-up device 20 as shown in Figure 1 can provide especially preferable use of the puncture-sealant.

The pumping-up device 20 shown in Figure 1 employs a small air compressor 1 as the pressure source. The air compressor 1 is connected to a gas introducing section 3 of a pressure-resistant container 4 via a hose 2. The gas introducing section 3 is formed as a riser tube extending to reach above a liquid surface of the puncture-sealant 6 contained in the pressure-resistant container 4, and the gas introducing section 3 can be closed at a plug valve 5.

The pressure-resistant container 4 includes an outlet valve 7 for discharging the puncture-sealant 6. One end of a hose 8 is connect to the outlet valve 7, and another end of the hose 8 is attached to a threaded adapter 9, which is attached to a tire valve 10 with a screw.

The pressure-resistant container 4 includes filling stubs 12 and a jacket 11 filled with water. As required, calcium chloride as a heat source may be filled in the filling stub 12. If the puncture-sealant 6 freezes at low temperature, heat released by hydration of the heat source heats up the puncture-sealant 6 to a usable temperature.

An electric cable 13 is connected to the air compressor 1, and a plug 14 thereof is inserted, for example, into a cigarette lighter.

If a tire is punctured, the threaded adapter 9 is screwed on and attached to the tire valve 10 and the air compressor 1 is connect to the cigarette lighter, and the plug valve 5 is opened at the gas introducing section 3 of the pressure-resistant container 4. Then, the compressed air introduced from the air compressor 1 through the gas introducing section 3 into the pressure-resistant container 4 extrudes the puncture-sealant 6 out from the outlet valve 7, so that the puncture-sealant 6 is introduced into the tire through the tire valve 10. As a result, the tire is inflated with air again to have a predetermined internal pressure. When this procedure is completed, the threaded adapter 9 is removed from the tire valve 10 and the air compressor 1 is turned off. After this, running in is immediately carried out over a certain distance to spread the puncture-sealant 6 inside the tire to seal a puncture hole. Subsequently, the pumping-up device 20 is connected again to pump up the tire until it has a required internal pressure.

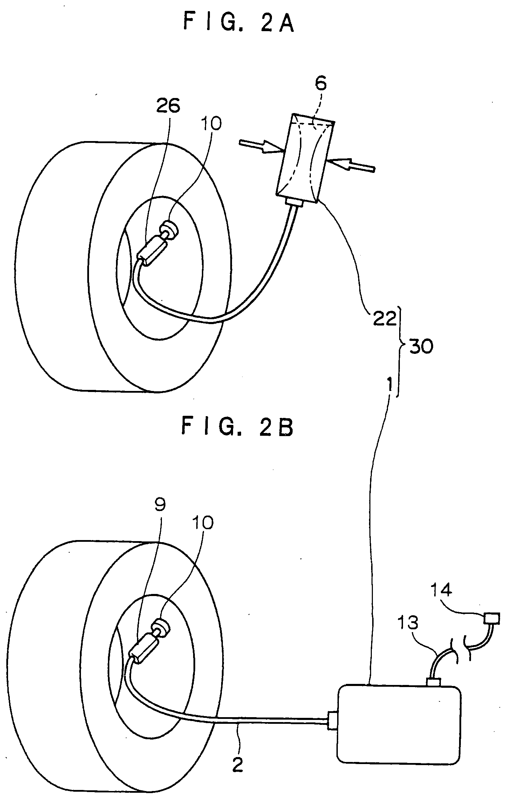

The puncture-sealant of the invention can also be used more preferably with a pumping-up device 30 shown in Figures 2A and 2B. It should be noted that, in the pumping-up device shown in Figures 2A and 2B, parts that are common with those of the pumping-up device 20 shown in Figure 1 are assigned with the same reference numerals and explanations thereof are omitted.

The pumping-up device 30 includes a resin bottle 22 shown in Figure 2A, which is a container for the puncture-sealant 6, and the air compressor 1 shown in Figure 2B as the pressure source. The bottle 22 contains the puncture-sealant 6 of an amount necessary for a single repairing of puncture. A hose 24 provided with an adapter 26 at an end thereof is connected to the bottle 22. The hose 2 connected to the air compressor 1 is also provided with an adapter 9 at an end thereof. It should be noted that, if the hose 24 for the bottle 22 is of a type directly connectable to the tire valve 10, the adapter 9 may be omitted.

When a tire is punctured, the adapter 26 for the bottle 22 is screwed on and attached to the tire valve 10. Thus, the bottle 22 communicates with interior of the tire via the hose 24 and the adapter 26. In this state, an operator squashes the bottle 22, as shown by the double-dashed line (phantom line) in Figure 2A, to squeeze out the puncture-sealant 6 from the bottle 22, so that the puncture-sealant 6 is injected into the tire through the hose 24.

When the injection of the puncture-sealant 6 from the bottle 22 into the tire is completed, the operator removes the adapter 26 from the tire valve 10 to disengage the bottle 22 from the tire.

Subsequently, the operator screws on the adapter 9 of the air compressor 1 to attach to the tire valve 10, so that the air compressor 1 communicates with interior of the tire via the adapter 9 and the hose 2. In this state, the operator turns on the air compressor 1 to inflate the tire with pressurized air again until the tire has a predetermined internal pressure. When this procedure is completed, the operator removes the adapter 9 from the tire valve 10 and turns off the air compressor 1. After this, running is immediately carried out over a certain distance to spread the puncture-sealant 6 inside the tire to seal a puncture hole. Subsequently, the operator connects the air compressor 1 of the pumping-up device 30 again to pump up the tire until it has a required internal pressure.

Examples

Hereinafter, the invention will be described more in details by way of Examples. These Examples do not limit the invention.

[Examples 1 to 3 and Comparative Examples 1 to 3]

Materials shown in Table 1 below were mixed into NBR latex (Nipole manufactured by ZEON Corporation) to prepare puncture-sealants of Examples 1 to 3 and Comparative Examples 1 to 3.

It should be noted that, as the short fiber, nylon short fibers with a specific gravity of 1.14, a diameter of 15 $\mu$m and a length of 4 mm were used. Further, viscosities (viscosities at temperatures in the range from 60 °C to -20 °C) of the puncture-sealants measured with a B-type viscometer were within a range from 3 mPa.s to 6000 mPa.s.

[Example 4]

A puncture-sealant of Example 4 was prepared in the same manner as in Example 1, except that, before mixing the short fiber in the NBR rubber latex, the short fiber was treated with a solvent employing a higher alcohol derivative (Emulon, manufactured by Meisei Chemical Works, Ltd.). A viscosity of the puncture-sealant (viscosity at temperatures in the range from 60 °C to -20 °C) was within a range from 3 mPa.s to 6000 mPa.s.

The treatment with the solvent was conducted in the following manner. First, an aqueous solution containing the higher alcohol derivative (solvent) was prepared. Then, the short fiber was immersed in the thus prepared aqueous solution, with the amount of the solvent being 3 parts by mass with respect to 100 parts by mass of the short fiber.

[Example 5] (not according to the invention)

A puncture-sealant was prepared in the same manner as in Example 1, except that, in place of the short fiber, a terpenephenol resin (YS Polystar manufactured by Yasuhara Chemical Co., Ltd., a content thereof in the puncture-sealant being 5 % by mass) was included as a resin adhesive so that 5 % of the 12 % by mass of water was substituted with this resin. A viscosity of the puncture-sealant (viscosity at temperatures in the range from 60 °C to -20 °C) was within a range from 3 mPa.s to 6000 mPa.s.

EP 1 566 424 B1

[Example 6] (not according to the invention)

A puncture-sealant was prepared in the same manner as in Example 1, except that the above terpenephenol resin (a content thereof in the puncture-sealant being 5 % by mass) was included as the resin adhesive so that 5 % of the 12 % by mass of water was substituted with the resin. A viscosity of the puncture-sealant (viscosity at temperatures in the range from 60 °C to -20 °C) was within a range from 3 mPa.s to 6000 mPa.s.

100 g was collected from each of the puncture-sealants prepared in Examples 1 to 6 and Comparative Examples 1 to 3, and retained at 200 °C for 30 minutes. Thereafter, solid contents were calculated based on the masses after the 30 minutes. These solid contents are shown in Table 1 below. Unless otherwise specified, the unit is "percent by mass" in Table 1.

Table 1

|  | NBR rubber latex | Ethylene glycol | Water | Nylon short fiber | Additives* | Solid content |
|---|---|---|---|---|---|---|
| Example 1 | 55 | 30 | 12 | 2 | Some (residual) | 35 |
| Example 2 | 55 | 30 | 12 | 0.12 | Some (residual) | 33 |
| Example 3 | 55 | 30 | 12 | 4.98 | Some (residual) | 38 |
| Example 4 | 55 | 30 | 12 | 3 | Some (residual) | 35 |
| Example 5** | 55 | 30 | 12 | - | Some (residual) | 33 |
| Example 6** | 55 | 30 | 12 | 1 | Some (residual) | 35 |
| Comp. Ex. 1 | 55 | 30 | 12 | - | Some (residual) | 32 |
| Comp. Ex. 2 | 55 | 30 | 12 | 0.08 | (residual) | 32 |
| Comp. Ex. 3 | 55 | 30 | 12 | 5.2 | Some (residual) | 38 |

*Additives: a defoaming agent, a thickener, a pH controller
**Not according to the invention.

The prepared puncture-sealants were evaluated with respect to (1) the puncture hole sealing ability, (2) the ease of injection, (3) the antifreezing property and (4) the separation stability, in the manner described below.

(1) Puncture sealing ability:

Using a drill, a hole of $\phi$ 1.5 mm was made in a tire tread groove of a tire, and the puncture-sealant thus prepared was injected into the tire and the tire was mounted on a vehicle. Then, while maintaining an air pressure of 1.3 kgf/cm$^2$ (12.74 x 10$^{-4}$ Pa), the vehicle was driven at a speed of about 50 km/h, and a time required to completely stop air leakage was measured.

Regarding the measured time, the time required to complete sealing using the puncture-sealant of Comparative Example 1 was indexed as 100, the time (X) required to complete sealing using each of the puncture-sealants of Examples 1 to 6 and Comparative Examples 2 and 3 was indexed by:

$$X/(\text{time of Comparative Example 1}) \times 100,$$

and the indices thus obtained were compared. Results are shown in Table 2 below.

(2) Ease of injection:
Using a 100 ml syringe, each of the prepared puncture-sealants was injected through the valve. Taking the time required to inject the puncture-sealant of Comparative Example 1 as a reference, a injection time within a range of ± 20 % of the injection time of Comparative Example 1 was judged to be "acceptable". Results are shown in Table 2 below.
(3) Antifreezing property:

The prepared puncture-sealants were stored at -30 °C for 3 hours. Whether each of the puncture-sealants had frozen was visually evaluated, with the puncture-sealant which had not frozen being judged to be "acceptable". Results are shown in Table 2 below.

(4) Separation stability:

The prepared puncture-sealants were left at 60 °C for one month. Whether or not each of the puncture-sealants had separated was visually evaluated, with the puncture-sealant which did not exhibit separation being judged to be "acceptable". Results are shown in Table 2 below.

Table 2

|  | Sealing ability | Ease of injection | Freezing property | Separation stability |
|---|---|---|---|---|
| Example 1 | 28 | Acceptable | Acceptable | Acceptable |
| Example 2 | 32 | Acceptable | Acceptable | Acceptable |
| Example 3 | 26 | Acceptable | Acceptable | Acceptable |
| Example 4 | 27 | Acceptable | Acceptable | Acceptable |
| Example 5** | 47 | Acceptable | Acceptable | Acceptable |
| Example 6** | 24 | Acceptable | Acceptable | Acceptable |
| Comp. Ex. 1 | 100 | - | Acceptable | Acceptable |
| Comp. Ex. 2 | 100 | Acceptable | Acceptable | Acceptable |
| Comp. Ex. 3 | 25 | Unacceptable | Acceptable | Acceptable |
| **Not according to the invention. | | | | |

As can be seen from the results in Table 2, the puncture-sealants of Examples 1 to 6 which contained the short fiber are improved in sealing ability. Further, by setting the solid content and the short fiber content within the predetermined ranges, the ease of injection, the antifreezing property and the separation stability, which are as good as those of the conventional puncture-sealants, can be obtained while maintaining high sealing ability. Thus, from these results, it is confirmed that the puncture-sealant of the invention had excellent practicality.

Industrial Applicability

As described above, the puncture-sealant of the invention can maintain high sealing ability and can exhibit excellent practical performances. Therefore, the puncture-sealant of the invention is applicable to puncture repairing for various pneumatic tires, such as tires for automobiles, two-wheeled vehicles, unicycles, wheelbarrows, wheelchairs, and agricultural and grounds-maintenance vehicles.

**Claims**

1. A puncture-sealing agent for sealing a hole in a punctured tire, the puncture-sealing agent comprising:

(1) at least one type of rubber latex selected from the group consisting of SBR latex, NBR latex, MBR latex, carboxyl-modified SBR latex and carboxyl-modified NBR latex;
(2) an antifreezing agent; and
(3) at least one of a short fiber and a resin adhesive that is compatible with the rubber latex,

**characterised in that** a content of solid components is within a range from 5 to 70% by mass, the short fiber fiber comprises one of polyester, polyethylene, nylon, polypropylene or a complex of two or more of them, and wherein a ratio (L/D) of the length (L) of the short fiber to the diameter (D) of the short fiber is within a range of $5 \leq L/D \leq 2000$.

2. The puncture-sealing agent as claimed in claim 1, wherein the resin adhesive is added to of an aqueous dispersion of the rubber latex or an aqueous emulsion of the rubber latex.

3. The puncture-sealing agent as claimed in claim 1 or 2, wherein a content of the resin adhesive is within a range from 3 to 30% by mass.

4. The puncture-sealing agent as claimed in any of claims 1 to 3, wherein a content of the antifreezing agent is within a range from 5 to 50% by mass.

5. The puncture-sealing agent as claimed in any of claims 1 to 4, wherein a viscosity of the puncture-sealing agent at least before it is filled in the tire and at temperatures in the range from 60°C to -30°C is within a range from 3 mPa.s to 600 mPa.s.

6. The puncture-sealing agent as claimed in any of claims 1 to 5, wherein a content of the short fiber is within a range from 0.1 to 5 % by mass.

7. The puncture sealing agent as claimed in any of claims 1 to 6, wherein a length (L) of the short fiber is within a range of $0.05 \leq L \leq 10$ mm.

8. The puncture-sealing agent as claimed in any of claims 1 to 7, wherein a diameter (D) of the short fiber is within a range of $1 \leq D \leq 100$ $\mu$m.

9. The puncture-sealing agent as claimed in any of claims 1 to 8, wherein a specific gravity (S) of the short fiber is within a range of $0.8 \leq S \leq 1.4$.

10. The puncture-sealing agent as claimed in any of claims 1 to 9, wherein all or part of the short fiber is treated with a solvent.

11. The puncture-sealing agent as claimed in claim 1, wherein the (3) at least one of a short fiber and a resin adhesive that is compatible with the rubber latex is a short fiber, of the short fiber, all or a part is treated with at least one of a higher alcohol derivative and a betaine surfactant.


**Patentansprüche**

1. Flickmittel zum Flicken eines Lochs in einem durchstochenen Reifen, wobei das Flickmittel Folgendes beinhaltet:

   (1) mindestens eine Art von Kautschuklatex, gewählt aus der Gruppe, bestehend aus SBR-Latex, NBR-Latex, MBR-Latex, carboxylmodifiziertem SBR-Latex und carboxylmodifiziertem NBR-Latex;
   (2) ein Frostschutzmittel; und
   (3) mindestens eines von einer kurzen Faser und einem Harzklebstoff, welcher mit dem Kautschuklatex kompatibel ist,

   **dadurch gekennzeichnet, dass** ein Gehalt an festen Komponenten in einem Bereich von 5 bis 70 % Gewichtsprozent liegt,
   wobei die kurze Faser eines von Polyester, Polyethylen, Nylon, Polypropylen oder einem Komplex aus zwei oder mehr Elementen davon enthält, und
   wobei ein Verhältnis (L/D) zwischen der Länge (L) der kurzen Faser und dem Durchmesser (D) der kurzen Faser in einem Bereich von $5 \leq L/D \leq 2000$ liegt.

2. Flickmittel nach Anspruch 1, bei welchem der Harzklebstoff zu einem von einer wässrigen Dispersion aus dem Kautschuklatex oder einer wässrigen Emulsion aus dem Kautschuklatex hinzugefügt wird.

3. Flickmittel nach Anspruch 1 oder 2, bei welchem ein Gehalt an Harzklebstoff in einem Bereich von 3 bis 30 Gewichtsprozent liegt.

4. Flickmittel nach einem der Ansprüche 1 bis 3, bei welchem ein Gehalt an Frostschutzmittel in einem Bereich von 5 bis 50 Gewichtsprozent liegt.

**5.** Flickmittel nach einem der Ansprüche 1 bis 4, bei welchem eine Viskosität des Flickmittels, zumindest bis es in den Reifen gefüllt wird und bei Temperaturen in dem Bereich von 60°C bis -30°C, in einem Bereich von 3 mPa.s bis 600 mPa.s liegt.

**6.** Flickmittel nach einem der Ansprüche 1 bis 5, bei welchem ein Gehalt an der kurzen Faser in einem Bereich von 0,1 bis 5 Gewichtsprozent liegt.

**7.** Flickmittel nach einem der Ansprüche 1 bis 6, bei welchem eine Länge (L) der kurzen Faser in einem Bereich von $0,05 \leq L \leq 10$ mm liegt.

**8.** Flickmittel nach einem der Ansprüche 1 bis 7, bei welchem ein Durchmesser (D) der kurzen Faser in einem Bereich von $1 \leq D \leq 100$ µm liegt.

**9.** Flickmittel nach einem der Ansprüche 1 bis 8, bei welchem ein spezifisches Gewicht (S) der kurzen Faser in einem Bereich von $0,8 \leq S \leq 1,4$ liegt.

**10.** Flickmittel nach einem der Ansprüche 1 bis 9, bei welchem die Gesamtheit oder ein Teil der kurzen Faser mit einem Lösemittel behandelt ist.

**11.** Flickmittel nach Anspruch 1, bei welchem (3) mindestens eines von einer kurzen Faser und einem Harzklebstoff, welcher mit dem Kautschuklatex kompatibel ist, eine kurze Faser ist, und die Gesamtheit oder ein Teil der kurzen Faser mit mindestens einem von einem Derivat eines höheren Alkohols und einem Betain-Tensid behandelt ist.

## Revendications

**1.** Agent d'obturation de crevaison pour obturer un trou dans un pneumatique crevé, l'agent d'obturation de crevaison comprenant :

    (1) au moins un type de latex de caoutchouc qui est sélectionné parmi le groupe qui est constitué par un latex SBR, un latex NBR, un latex MBR, un latex SBR modifié par carboxyle et un latex NBR modifié par carboxyle ;
    (2) un agent antigel ; et
    (3) au moins l'un parmi une fibre courte et un adhésif de résine qui est compatible avec le latex de caoutchouc ;

    **caractérisé en ce que** une teneur de composants solides est à l'intérieur d'une plage qui va de 5 % à 70 % en masse ; la fibre courte comprend l'un parmi le polyester, le polyéthylène, le nylon, le polypropylène ou un complexe de deux ou plus d'entre eux; et
    dans lequel un rapport (L/D) de la longueur (L) de la fibre courte sur le diamètre (D) de la fibre courte est à l'intérieur d'une plage définie par $5 \leq L/D \leq 2000$.

**2.** Agent d'obturation de crevaison tel que revendiqué selon la revendication 1, dans lequel l'adhésif de résine est ajouté à une dispersion aqueuse du latex de caoutchouc ou à une émulsion aqueuse du latex de caoutchouc.

**3.** Agent d'obturation de crevaison tel que revendiqué selon la revendication 1 ou 2, dans lequel une teneur de l'adhésif de résine est à l'intérieur d'une plage qui va de 3 % à 30 % en masse.

**4.** Agent d'obturation de crevaison tel que revendiqué selon l'une quelconque des revendications 1 à 3, dans lequel une teneur de l'agent antigel est à l'intérieur d'une plage qui va de 5 % à 50 % en masse.

**5.** Agent d'obturation de crevaison tel que revendiqué selon l'une quelconque des revendications 1 à 4, dans lequel une viscosité de l'agent d'obturation de crevaison, au moins avant qu'il ne soit rempli dans le pneumatique et à des températures dans la plage qui va de 60 °C à -30 °C, est à l'intérieur d'une plage qui va de 3 mPa.s à 600 mPa.s.

**6.** Agent d'obturation de crevaison tel que revendiqué selon l'une quelconque des revendications 1 à 5, dans lequel une teneur de la fibre courte est à l'intérieur d'une plage qui va de 0,1 % à 5 % en masse.

**7.** Agent d'obturation de crevaison tel que revendiqué selon l'une quelconque des revendications 1 à 6, dans lequel une longueur (L) de la fibre courte est à l'intérieur d'une plage définie par $0,05 \leq L \leq 10$ mm.

**8.** Agent d'obturation de crevaison tel que revendiqué selon l'une quelconque des revendications 1 à 7, dans lequel un diamètre (D) de la fibre courte est à l'intérieur d'une plage définie par $1 \leq D \leq 100 \ \mu m$.

**9.** Agent d'obturation de crevaison tel que revendiqué selon l'une quelconque des revendications 1 à 8, dans lequel une densité relative (S) de la fibre courte est à l'intérieur d'une plage définie par $0,8 \leq S \leq 1,4$.

**10.** Agent d'obturation de crevaison tel que revendiqué selon l'une quelconque des revendications 1 à 9, dans lequel la totalité ou une partie de la fibre courte est traitée à l'aide d'un solvant.

**11.** Agent d'obturation de crevaison tel que revendiqué selon la revendication 1, dans lequel (3) au moins l'un parmi une fibre courte et un adhésif de résine qui est compatible avec le latex de caoutchouc est une fibre courte, la totalité ou une partie de la fibre courte étant traitée à l'aide d'au moins l'un parmi un dérivé d'alcool supérieur et un surfactant à base de betaïne.

F I G. 1

# F I G. 2 A

# F I G. 2 B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4501825 A